# EUROPÄISCHE PATENTANMELDUNG

(11) **EP 0 768 195 A2**
(43) Veröffentlichungstag der Anmeldung: **16.04.1997**
(21) Anmeldenummer: 96101446.1
(22) Anmeldetag: 01.02.1996
(51) Int. Cl.: B60G 3/06, B60G 7/00, B60G 25/00, B62D 21/12, B60P 3/42

(54) **Allrad-Kfz**

(30) Priorität: 09.10.1995 DE 19537573
(71) Anmelder: IGLHAUT GmbH, 97340 Marktbreit (DE)
(72) Erfinder: Iglhaut, Hans, D-97340 Segnitz (DE); Eckstein, Michael, D-71522 Backnang (DE)
(74) Vertreter: Alber, Norbert

(57) **Zusammenfassung**

Es wird ein Vierradantrieb sowie ein Verfahren zum Umrüsten von Zweiradantrieb auf Vierradantrieb vorgestellt, bei dem das gattungsgemäße Konstruktionsprinzip der Achse, welches wenigstens an der Vorderachse vorhanden ist, beibehalten wird. Dabei wird der Abstand des Achsträgers (4) gegenüber der Bodengruppe des Kfz (27) vergrößert, im Bereich zwischen dem Achsträger (4) und der Bodengruppe wird ein Vorderachsgetriebe (14) angeordnet, die Achsschenkel (6) werden mit einer Durchgangsöffnung (24) zum Hindurchführen der Antriebswelle ausgestattet und die Befestigungsposition für den Dämpfer (7) am Achsschenkel (6) wird um die für die Abstandsvergrößerung (27) zwischen Achsträger (4) und Bodengruppe des Kfz höher gesetzt, zwischen dem ursprünglichen Achsträger (4) und der Bodengruppe wird ein Durchlaß (28) für die Antriebswelle geschaffen und das Querprofil (17) des Achsträgers (4) im mittleren Bereich wird entfernt sowie zusätzliche querverlaufende Versteifungsprofile (18,19) werden zwischen den Befestigungsbereichen (12a,12b) des Achsträgers (4) angeordnet.

## Beschreibung

Bei kleinen Nutzfahrzeugen wie Lieferwagen und Transportern besteht das Problem, daß vierradgetriebene, geländegängige Fahrzeuge benötigt werden, jedoch die benötigte Stückzahl so gering ist, daß hierfür eine Großserienfertigung nicht in Frage kommt.

Derartige Fahrzeuge müssen dabei in Einzelarbeit entweder von den serienmäßigen Straßenversionen dieser Fahrzeuge aus umgebaut werden, oder es müssen in Kleinserien entsprechende Fahrzeuge neu produziert werden.

Dabei muß der Neubau des Fahrwerks bzw. der Umbau des Fahrwerks möglichst einfach und effizient gestaltet werden, um den Gesamtpreis des Fahrzeuges nicht zu hoch ansteigen zu lassen. Es wird daher versucht, die Umbauarbeiten am Fahrzeug, insbesondere die Schweißarbeiten, möglichst gering zu halten und in möglichst großem Umfang auf die bereits vorhandenen Einbauteile aus dem Serienfahrzeug zurückzugreifen.

Fahrwerke von Transportern wiesen bisher in der Regel Starrachsen auf, die über außen längsverlaufende Blattfederpakete gegenüber dem Aufbau gefedert waren, und wobei die Hinterachse angetrieben war, während der Motor meist im Frontbereich des Fahrzeuges untergebracht war. Auch die allradgetriebenen Versionen verfügten dabei entsprechend über blattgefederte Starrachsen.

In jüngster Zeit geht jedoch bei Transportern der Trend dahin, die Endgeschwindigkeiten zu erhöhen und auch Fahrtkomfort und Fahrverhalten demjenigen eines Pkw anzunähern. Aus diesem Grund werden auch bei Transportern Vorderachskonstruktionen gewählt, die ein besseres Fahrverhalten als blattgefederte Starrachsen ermöglichen.

Eine derartige Vorderachskonstruktion ist eine Einzelradaufhängung, bei der jedes Rad - wie im Pkw-Bau üblich - über einen Achsschenkel am äußeren Ende eines Querlenkers, des sogenannten Dreieckslenkers, befestigt ist, welcher um eine im wesentlichen horizontale, in Längsrichtung verlaufende Schwenkachse an zwei chassisfesten Aufnahmepunkten gelagert ist.

Dabei sind die chassisfesten Punkte am jeweils seitlichen, äußeren Ende eines unter die Bodengruppe geschraubten, in Querrichtung durchgehenden Achsträgers angeordnet, bei dem es sich um ein Preßteil oder eine Schweißkonstruktion aus Stahlblech handelt. Die Federung erfolgt dabei über eine Querblattfeder, welche sich quer unter dem Fahrzeug entlang des Achsträgers erstreckt, und dabei einerseits in ihrem mittleren Bereich unterhalb des Achsträgers verläuft und gegenüber diesem fixiert ist, und andererseits mit ihren freien Enden jeweils auf die Oberseite eines der Dreieckslenker drückt.

Durch diese Konstruktion wird einerseits beim Einfedern des einen Rades der Achse eine Stabilisierung durch Einfedern des anderen Rades erzielt, und andererseits ist durch entsprechend stabile Ausführung der relativ preisgünstigen Querblattfeder eine relativ hohe Achslast bei dennoch gutem Fahrverhalten realisierbar.

Es ist daher die Aufgabe gemäß der Erfindung, einen Vierradantrieb sowie ein Verfahren zum Umrüsten von Zweiradantrieb auf Vierradantrieb zu schaffen, bei dem das beschriebene gattungsgemäße Konstruktionsprinzip der Achse, welches wenigstens an der Vorderachse vorhanden ist, beibehalten wird.

Diese Aufgabe wird durch die kennzeichnenden Merkmale der Ansprüche 1 und 7 gelöst. Vorteilhafte Ausführungsformen ergeben sich aus den Unteransprüchen.

Bei einer derartigen querblattgefederten lenkbaren Achse, in der Regel der Vorderachse, müssen Antriebswellen von einem mittigen Vorderachsgetriebe nach außen zu den anzutreibenden Vorderrädern geführt werden. Um die Federung mittels der Querblattfeder zu optimieren, sollen die Federn im wesentlichen auf einer Linie mit der Querblattfeder - in der Aufsicht betrachtet - liegen. In vertikaler Richtung ist die Radmitte dabei oberhalb dem Ende der Blattfeder angeordnet.

Um die Verwendung üblicher Naben, die die Radmitte darstellen, zu ermöglichen, verlaufen die entsprechenden Antriebswellen oberhalb der Querblattfeder.

Da die Querblattfeder - zumindest in ihrem mittleren Bereich - unmittelbar unterhalb des Achsträgers verläuft und sich an diesem abstützt, muß oberhalb des Achsträgers, zur Bodengruppe hin, Platz für die Antriebswellen als auch für das zwischen den Antriebswellen vorzusehende Vorderachsgetriebe vorgesehen werden.

Das Vorderachsgetriebe steht über eine Gelenkwelle, also eine übliche teleskopierbare Kardanwelle, mit einem Verteilergetriebe in Wirkverbindung, welches das vom Motor-Getriebeblock kommende Drehmoment auf die beiden angetriebenen Achsen, also Vorderachse und Hinterachse, verteilt.

Da der Motor-Getriebe-Block in der Regel unmittelbar auf der Vorderachse sitzt, bedeutet dies, daß das Verteilergetriebe zwischen Vorderachse und Hinterachse angeordnet ist, und somit einen Abtrieb nach hinten in Richtung Hinterachse aufweist, nach vorne dagegen sowohl einen Antrieb vom Motor-Getriebe-Block her, als auch einen Abtrieb in Richtung auf das Vorderachs-Getriebe.

Dabei ist einerseits zu beachten, daß für die zwischen den einzelnen Getrieben angeordneten Gelenkwellen bestimmte maximale Winkelstellungen nicht überschritten werden dürfen, als auch eine Mindest-Baulänge nicht unterschritten werden kann, und zusätzlich Winkelstellung und Länge der Gelenkwellen unter Umständen unerwünschte Vibrationen hervorrufen können.

Weiterhin muß berücksichtigt werden, daß bei Hinterachskonstruktionen mit starrem Achskörper das Hinterachsgetriebe im Achskörper angeordnet ist und damit mit diesem mitfedert, während das Vorderachsgetriebe an der Bodengruppe fest angeordnet ist, und ebenso das Verteilergetriebe. Zusätzlich ist der Bauraum für das relativ große Verteilergetriebe sehr begrenzt, da auf der Höhe des Verteilergetriebes in der Regel auf der einen Seite der Tank und auf der anderen Seite die Auspuffanlage angeordnet sind, so daß das Verteilergetriebe in der Aufsicht möglichst schmalbauend realisiert werden muß.

Als besonders günstige Lösung hat es sich erwiesen, das Verteilergetriebe mit einer Gelenkwelle, die so kurz wie konstruktiv möglich ist, hinter dem Vorderachsgetriebe anzuordnen und dabei die Winkelstellung so zu wählen, daß die sich ergebenden Winkelstellungen der Kreuzgelenke in den Gelenkwellen sowohl zwischen Vorderachsgetriebe und Verteilergetriebe als auch zwischen Verteilergetriebe und Motor-Getriebe-Block in etwa gleich groß werden. Besonders vorteilhaft ist dabei die nicht exakt parallele, sondern leicht winklige, vorzugsweise sich schneidende Anordnung der Wellen innerhalb des Verteilergetriebes zueinander, insbesondere der beiden Wellen eines Zweiwellengetriebes, wodurch in den zum Vorderachs-Getriebe und zum Motor-Getriebe-Block führenden Getriebewellen der Winkel in den Kreuzgelenken annähernd 180° erreicht.

Zusätzlich ermpfiehlt es sich dabei, die Primärwelle des Getriebes entsprechend der Verbindungslinie zwischen Motor-Getriebe-Block und Hinterachs-Getriebe leicht schräg nach hinten abfallend gegenüber der Bodengruppe auszurichten, wodurch die gegenüber der Primärwelle geneigte Sekundärwelle fast waagrecht nach vorne auf das Vorderachs-Getriebe zu verläuft.

Die Winkelstellung vom Verteilergetriebe zur Hinterachse ist wegen des vergleichsweise großen Abstandes in der Regel unproblematisch.

Im Falle einer zusätzlich vorhandenen Getriebequertraverse, die in der Regel zur Versteifung der Bodengruppe des Fahrzeuges unterhalb dieser verschraubt ist, muß diese Quertraverse von einer Gelenkwelle, insbesondere der Gelenkwelle zwischen Verteiler-Getriebe und Vorderachs-Getriebe, durchdrungen werden. Zu diesem Zweck weist die Quertraverse ein in Längsrichtung verlaufendes, eingeschweißtes Rohrstück im Profil auf, welches von der Gelenkwelle mit ausreichendem Spiel durchlaufen werden kann, ohne daß es zu Kollisionen oder zur Ausbildung von Körperschall wegen zu geringem Abstand zwischen Gelenkwelle und Innenumfang des Rohrstutzens kommt.

Die Querblattfeder selbst ist dabei nicht wie üblich bogenförmig mit ihrem höchsten Punkt in der Mitte angeordnet, sondern leicht hutförmig ausgebildet, wobei die offene Seite des Hutes in der Mitte nach oben gerichtet ist, und sich die freien Enden, die frei endenden Schenke des Hutprofiles, schräg nach unten außen abfallend zu den Dreieickslenkern hin erstrecken.

Diese Bauform schafft in der Mitte oberhalb der Blattfeder zusätzlichen Bauraum für das Vorderachsgetriebe, welches oberhalb der Mitte der Blattfeder angeordnet ist, vor allem verbunden mit der Tatsache, daß der Achsträger im Bereich der Querblattfeder - in der Aufsicht betrachtet - kein über die Breite durchgehendes Querprofil aufweist, welches die Anordnung des Vorderachsgetriebes in diesem Bereich behindert.

Die die Stabilität des Achsträgers gewährleistenden Querprofile sind stattdessen - in der Aufsicht betrachtet - vor und/oder hinter dem Bereich der Querblattfeder angeordnet, insbesondere im Bereich oder nahe an den Aufnahmepunkten für die Dreieckslenker an den äußeren Enden des Achsträgers.

Dadurch ergibt sich auch eine optimale Abstützung und Versteifung dieser stark belasteten Aufnahmepuntke des Achsträgers, so daß das bzw. die Querprofile vergleichsweise schwach dimensioniert werden können.

Bei der Umrüstung eines hinterradgetriebenen Fahrzeuges mit der gattungsgemäßen Vorderachskonstruktion auf Vorderrad und/oder Allradantrieb (was durch die Art und die Zuschaltmöglichkeiten des Verteilergetriebes festgelegt wird) sind vor allem Modifikationen am ursprünglichen Achsträger notwendig:

Dieser ist bei nichtangetriebener Vorderachse in der Höhe relativ flach ausgebildet und unmittelbar unter der Bodengruppe verschraubt, um einen möglichst hohen Nutzraum oberhalb der Bodengruppe zu bieten.

Zwecks Verwendung möglichst einfacher, handelsüblicher Vorderachs-Getriebe, Radnaben, Antriebswellen etc. ist es jedoch notwendig, das Vorderachsgetriebe möglichst auf der Verbindungslinie zwischen den beiden Vorderrädern - in der Aufsicht betrachtet - anzuordnen und die äußeren Enden der Antriebswellen direkt auf der Mitte der Radnaben, also der Radmitte, enden zu lassen.

Damit ergibt sich jedoch eine Lage der Radmitten oberhalb der Querblattfeder, welche sich genau unterhalb der Verbindungslinie zwischen den Radmitten und des Vorderachsgetriebes befindet.

Um Raum für das Vorderachsgetriebe und die Antriebswellen zu schaffen, wird der in der Aufsicht etwa H-förmige Achsträger, der mit seinen beiden seitlichen, in Längsrichtung verlaufenden Befestigungsbereichen mit der Unterseite der Bodengruppe verschraubt ist, auf Abstand zur Bodengruppe gesetzt. Zu diesem Zweck wird auf den Befestigungsbereichen ein Abstandsprofil, in der Regel ein geschlossenes Viereckprofil, angeordnet, in der Regel aufgeschweißt.

Zusätzlich wird das etwa in der Mitte der Befestigungsbereiche querverlaufende Profil des Achsträgers im mittleren Bereich, also im Bereich zwischen den Lagerungspunkten der Querblattfeder am Achskörper, vollständig entfernt und durch zwei vor und hinter der Querblattfeder bzw. dem Vorderachsgetriebe liegende Versteifungsprofile, die zwischen den Befestigungsbereichen eingeschweißt werden, ersetzt.

Zusammen mit der hutförmigen Kontur der Querblattfeder - in Längsrichtung betrachtet - ergibt sich damit ausreichend Raum für das Vorderachsgetriebe und für die Antriebswellen, die vom Vorderachsgetriebe zu den Radnaben führen.

Die Antriebswellen müssen zu diesem Zweck den Befestigungsbereich des Achsträgers durchdringen, wozu ein Durchgang in den Befestigungsbereich bzw. in dem darüberliegenden Abstandsprofil geschaffen werden muß durch Einschweißen eines U-Profiles, welches in Querrichtung durch das längsorientierte Abstandsprofil hindurch verläuft.

Trotz des vergrößerten Abstandes zwischen dem Achsträger und dem Aufbau des Fahrzeuges sollen die vorhandenen Dämpfer weiterhin Verwendung finden, die wie üblich zwischen einem Aufnahmepunkt F im Radhaus des Aufbaus und dem Achsschenkel, in dem die Nabe des Rades angeordnet ist, befestigt ist.

Um dies zu erreichen, wird der ursprüngliche Achsschenkel durch einen Achsschenkel ersetzt, dessen Befestigungsposition für das untere Ende des Dämpfers entsprechend höher liegt als beim ursprünglichen Achsschenkel. Dabei kann jedoch auch die ursprüngliche Spreizung, also der in Längsrichtung betrachtete Schrägstellungswinkel des Dämpfers gegenüber der Vertikalen, nicht beibehalten werden:

Wegen der Abstandsvergrößerung zwischen Achsträger und Bodengruppe verlagert sich bezüglich des oberen Endpunktes des Dämpfers der äußere Befestigungspunkt des Dreieckslenkers vertikal nach unten. Bei Beibehaltung der ursprünglichen Spreizung würde sich damit der obere Befestigungspunkt zur Fahrzeugmitte hin verlagern.

Da jedoch zur Vermeidung von umfangreichen Schweißarbeiten dieser Befestigungspunkt unverändert beibehalten werden soll, was wegen der gelenkigen Befestigung des Dämpfers an diesem Punkt auch unter Veränderung des Spreizungswinkels möglich wäre, würde die Dämpferrichtung nun zwischen dem ursprünglichen unveränderten Punkt und dem tiefergesetzten Punkt verlaufen. Diese Anordnung führt jedoch bereits zu Kollisionen mit der Radinnenseite, so daß der Befestigungsbereich für den Dämpfer am Achsschenkel nicht nur höhergesetzt, sondern soweit nach innen verlagert werden muß, daß diese Konditionen vermieden werden. Eine Verringerung der Spreizung um einige Grad wird hingenommen.

Da die Verwendung eines anderen Achsschenkels, der anstelle eines nach außen ragenden Dornes für das nichtangetriebene Rad nun eine Durchgangsöffnung für die Aufnahme der anzutreibenden Radnabe und das Hindurchführen der Antriebswellen aufweist, ohnehin unumgänglich ist, können an diesem neu zu schaffenden Achsschenkel auch die Modifikationen für die Dämpferaufnahme mitberücksichtigt werden, wodurch jedoch Umbauarbeiten am Aufbau, den oberen Befestigungspunkten für den Dämpfer, vermieden werden.

Eine Ausführungsform gemäß der Erfindung ist im folgenden anhand der Figuren beispielhaft näher beschrieben. Es zeigen:
- Fig. 1a, 1b:: einen Antriebsstrang des Kraftfahrzeuges in schematischen Ansichten,
- Fig. 2:: eine Seite der angetriebenen Vorderachse in einem vertikalen Schnitt in Längsrichtung betrachtet,
- Fig. 3:: eine perspektivische Ansicht eines seitlichen Endbereiches der Achskonstruktion,
- Fig. 4:: eine Aufsicht auf den Dreieckslenker und
- Fig. 5a, 5b:: eine Darstellung des Achsschenkels.

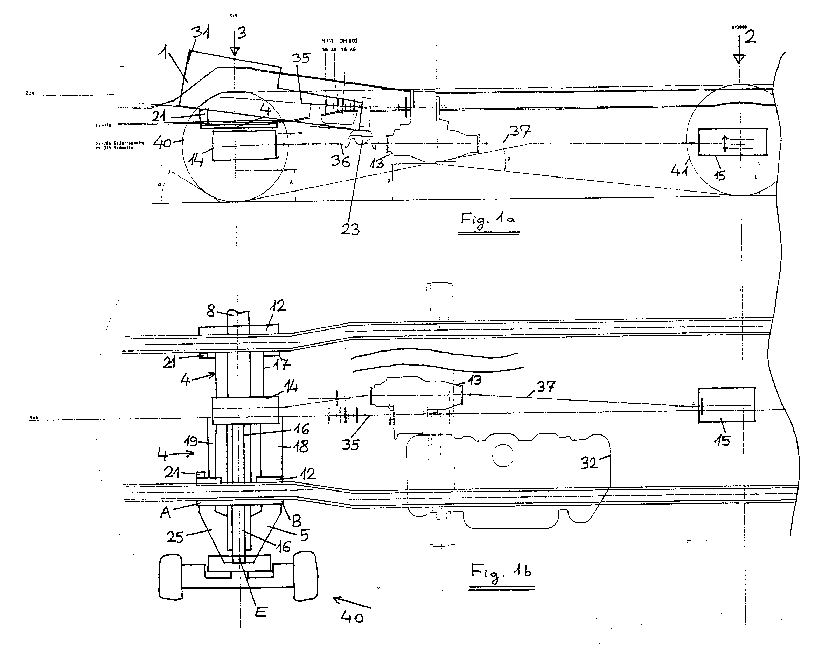

In den Figuren 1a und 1b ist ein Antriebsstrang schematisch in der Seitenansicht sowie in der Aufsicht dargestellt.

Wie in der Seitenansicht der Figur 1a dargestellt, befindet sich der Motor 1 und damit der Motor-Getriebe-Block 31 im wesentlichen über der Vorderachse 3.

Der Eingang der Primärwelle des Verteilergetriebes 13 ist dabei so angeordnet, daß die Kardanwelle 35 vom Motor-Getriebe-Block 31 zum Verteilergetriebe 13 schräg abfallend verläuft, und zwar auf der Längsmittelebene des Kfz.

Im Beispiel der Figuren 1 ist die Sekundärwelle des Verteilergetriebes 13 parallel zur Primärwelle angeordnet, liegt jedoch unterhalb und seitlich versetzt zur Primärwelle und parallel zur Längsrichtung ausgerichtet. Dadurch ergibt sich ein Verlauf der Kardanwelle 36 vom Verteilergetriebe 13 zum Vorderachs-Getriebe 14 etwa in einer waagrechten Ebene, jedoch an der außermittigen Position der Sekundärwelle des Verteilergetriebes zur etwa mittigen Position des Vorderachsgetriebes 14. Gleiches gilt auch für die Kardanwelle 37 vom Verteilergetriebe 13 zum Hinterachs-Getriebe 15.

Wie in der Seitenansicht der Figur 1a ferner zu erkennen, befindet sich das Vorderachs-Getriebe 14 innerhalb des Achsträgers 4, welcher quer unterhalb der Bodengruppe im Bereich der Vorderachse 3 verschraubt ist und - wie in der Aufsicht der Figur 1b zu erkennen - an seinen seitlichen Enden die Dreieckslenker 5 und damit die Vorderräder 40 trägt.

Der Achsträger 4 ist dabei bei einer nicht angetriebenen Vorderachse 3 im wesentlichen H-förmig ausgebildet, wie in der oberen Hälfte der Aufsicht der Figur 1b dargestellt. Die außen in Längsrichtung verlaufenden Befestigungsbereiche 12 sind dabei unterhalb der Längsholme des Chassis angeordnet und mit diesem verschraubt. Im vorderen, nach innen gerichteten Teil der Befestigungsbereiche 12 sind die Motorauflagerflächen 21 der Aufnahme des Motors angeordnet.

Dem gegenüber ist in der unteren, linken Fahrzeughälfte der Figur 1b der Achsträger 4 dargestellt, wie er bei einer angetriebenen Vorderachse 3 gestaltet ist. Damit befindet sich querverlaufend zwischen den Radmitten der Vorderräder 40, also unterhalb der Querblattfeder 8, kein durchgehendes Querprofil 17 des Achsträgers 4, sondern stattdessen sind vor und hinter diesem Bereich Versteifungsprofile 18, 19 durchgehend zwischen den beiden äußeren Befestigungsbereichen 12 angeordnet, in der Regel angeschweißt. Das hintere Versteifungsprofil 18 ist dabei zwischen den hinteren Aufnahmeschalen b, die an den Außenseiten der Befestigungsbereiche für die Querlenker 5 vorgesehen sind, eingesetzt, während das vordere Versteifungsprofil 19 noch hinter den vorderen Aufnahmeschalen a und damit den Lagerflächen 21 für die Motorlagerung, aber noch vor dem Bereich der Querblattfeder 8 eingesetzt ist.

Wie in der unteren Hälfte der Figur 1b ferner zu erkennen, verläuft oberhalb der Querblattfeder 8 vom Vorderachs-Getriebe 14 nach außen eine Antriebswelle 16 zu der in dem Achsschenkel 6 aufgenommenen, nicht dargestellten Nabe des Vorderrades 40.

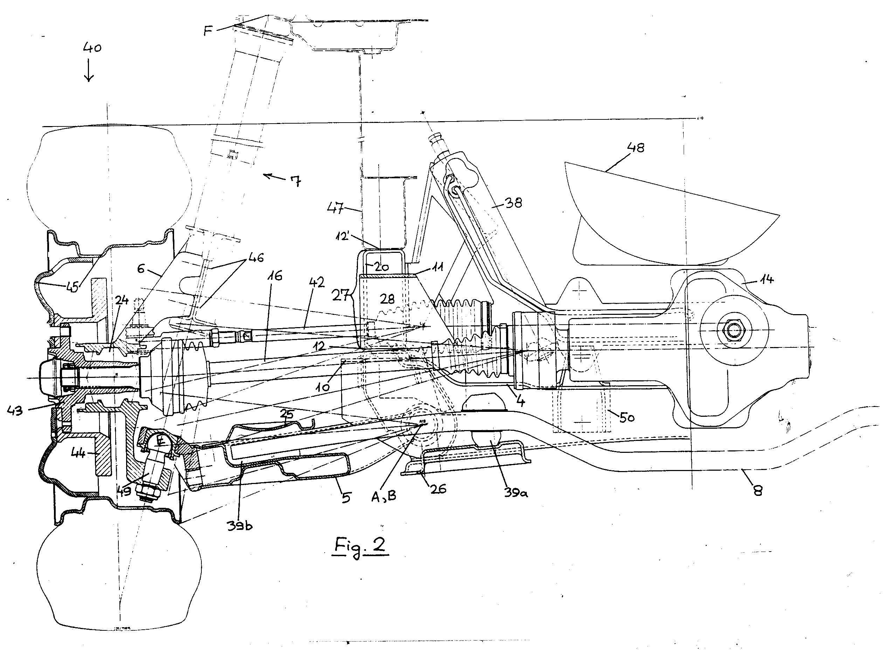

Wie üblich (siehe Fig. 2), ist der Achsschenkel 6 dabei am äußeren Befestigungspunkt E des Querlenkers 5 aufgenommen, welcher um die durch die Punkte A, B verlaufende längsgerichtete, horizontale Achse gegenüber dem Achsträger 4 verschwenkbar ist.

Wie ferner zu erkennen, drückt das äußere Ende der Querblattfeder 8 von oben auf den Dreieckslenker 5 und wird an diesem mittels eines angedeuteten, von oben aufgeschraubten Lagerdeckels 25 gehalten.

In der Aufsicht der Figur 1b ist ferner die beengte Einbausituation des Verteiler-Getriebes 13 zwischen den seitlich daneben angeordneten Tank 32 und der Auspuffanlage 34 zu erkennen.

Figur 2 zeigt in Fahrtrichtung betrachtet die linke Hälfte der Vorderachse 2. Dabei ist zunächst die hutförmige Gestaltung der Querblattfeder 8 zu erkennen, deren mittige Ausbuchtung nach oben offen ist und damit Platz für das unmittelbar darüber angeordnete Vorderachs-Getriebe 14 schafft.

Knapp außerhalb der mittigen, hutförmigen Durchbiegung ist die Querblattfeder 8 über Gummilager 39a, die oberhalb und unterhalb auf der Blattfeder sitzende Gummipuffer sind, unterhalb des Achsträgers 4 gegenüber diesem abgestützt und durch von unten her am Achsträger 4 angeschraubte Klemmplatten 26 gegenüber diesem abgestützt.

Die freien Enden liegen dagegen mittels einem das Ende der Querblattfeder umgegebenden Gummilager 39b auf der Oberseite des Dreieckslenkers 5 auf, auf welchem sie mittels einem darüber verschraubten Lagerdeckel 25 gehalten werden. Das freie, vom Achskörper 4 wegweisende Ende des Dreieckslenkers 5 weist dabei eine Pfanne für ein Kugelgelenk als Lagerpunkt E auf, mittels welchem in von unten in den Lagerpunkt E hineinragender Achsschenkelbolzen 49, der mit dem Achsschenkel 6 verschraubt ist, im Dreieckslenker 5 gelagert ist.

Der Achsschenkel 6 weist eine Durchgangsöffnung 24 für die Lagerung der Nabe auf, durch welche von der Innenseite die Antriebswelle 16 gesteckt und von außen verschraubt ist.

Der Achsschenkel 6 ist wie üblich zusätzlich mit dem unteren Ende des Dämpfers 8 fest verbunden und wird hinsichtlich seiner Längsstellung mittels einer Lenkstange 42, die ihn mit dem Lenkgetriebe 38 verbindet, angelenkt.

In Figur 2 ist ferner zu erkennen, daß zwischen dem Achsträger 4 und dem Längsträger 47, der Teil der Bodengruppe des Fahrzeugs ist, eine Abstandvergrößerung 27 stattgefunden hat durch Anordnung eines rechteckigen Abstandsprofiles 20, welches in Längsrichtung verläuft und auf der Oberseite des Befestigungsbereiches 12 des ursprünglichen Achsträgers 4 verschweißt ist. Dadurch bildet nun die Oberseite des Abstandsprofiles 20 den neuen Befestigungsbereich 12' mittels dort angeordneter Bohrungen und Positionierzapfen.

Wie Figur 2 ferner zeigt, verläuft die Antriebswelle 16 oberhalb der Querblattfeder 8 und zwar in einer solchen Höhe, daß sie nicht mehr in dem querverlaufenden Durchlass, der bei dem ursprünglichen Achsträger 4 durch ein nach unten offenes U-Profil 10 gebildet wird, Platz findet.

Ein vergrößerter, sich quer durch den Befestigungsbereich 12 bzw. 12' hindurch erstreckender Durchlass 28, der auch in dem Bereich des Abstandsprofiles 20 nach oben hineinreicht, wird daher durch ein wesentlich weiter oben endendes, nach unten offenes U-Profil 11 geschaffen, um ausreichend Platz für das Hindurchtreten der Antriebswelle 16 zu schaffen, unabhängig vom Einfederungszustand des Rades.

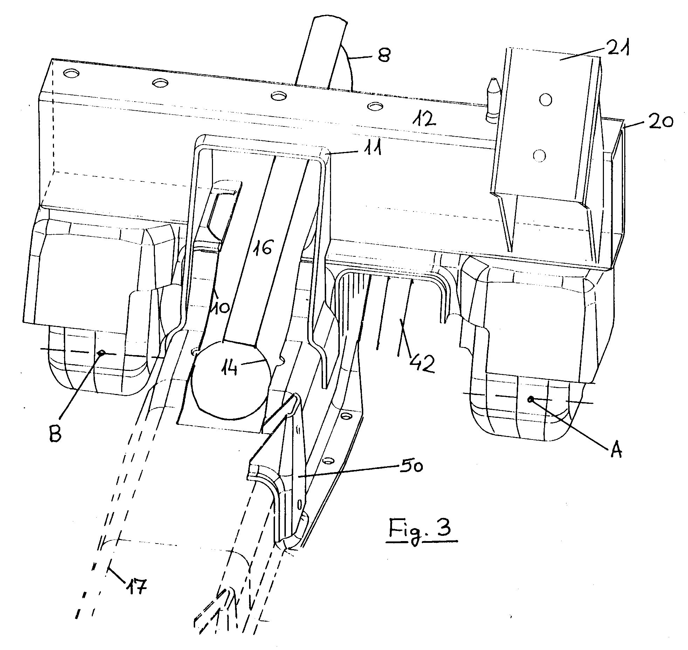

Die perspektivische Darstellung der Figur 3, in der ein bereits umgebauter Achskörper, jedoch ohne die querverlaufenden Versteifungsprofile 18 und 19 vor und hinter der Querblattfeder dargestellt wird, vermittelt einen besseren räumlichen Eindruck. Dort ist außerdem zu erkennen, daß die Lenkstange 42 zum Anlenken des Rades vor der übereinanderliegenden Querblattfeder 8 und Antriebswelle 16 durch eine separate kastenförmige Aussparung quer durch den Befestigungsbereich 12 des Achsträgers 4 hindurch nach außen zum Achsschenkel 6 verläuft.

Ferner ist in Figur 3 besser zu erkennen, daß für die Unterbringung der Antriebswelle 16 das unten offene U-Profil 10, welches querverlaufend Bestandteil des Achsträgers 4 ist, in dem äußeren, nach oben ansteigenden, Bereich im oberen, waagrechten Schenkel soweit ausgenommen und durch ein darübergesetztes zusätzliches U-Profil 11 der Durchlass 28 in der Höhe vergrößert ist, um die Antriebswelle 16 direkt oberhalb der Querblattfeder 8 anordnen zu können und damit mit der Antriebswelle unter Verwendung einer konventionellen Nabe einen Antrieb in der Mitte des Rades vornehmen zu können.

Figur 2 zeigt ferner in einem vertikalen Teilschnitt auch den Achsschenkel 6, dessen schräg nach oben innen verlaufender Fortsatz zum Befestigen des unteren Endes des Dämpfers 8 dient.

Aufgrund der Abstandsvergrößerung 27 muß - sofern der ursprüngliche Dämpfer 8 beibehalten werden, und Änderungen an der Karosserie bezüglich Verlegung des Aufnahmepunktes F vermieden werden soll - der Achsschenkel 6 nicht nur von einem nach außen ragenden Achszapfen für ein nichtangetriebenes Rad auf Durchgangsbohrung umgerüstet werden, sondern auch die Befestigungsposition für den Stoßdämpfer sowohl höher als auch weiter innen liegen, da ansonsten Kollisionen mit der Radinnenseite und dem Dämpfer 8 auftreten.

Durch die in Figur 3 ersichtliche Entfernung des Mittelteiles, das nach unten offene U-Profil 10, welches über die Querblattfeder 8 verlaufend von einem Befestigungsbereich 12 zum gegenüberliegenden Befestigungsbereich durchgeht (in Fig. 3 nur noch gestrichelt dargestellt), fallen auch die in Figur 2 ebenfalls nur gestrichelt dargestellten Befestigungsbereiche 50 für das Lenkgetriebe 38 weg.

Diese werden an dem zusätzlich anzubringenden, vorderen Versteifungsprofil 18 angeordnet.

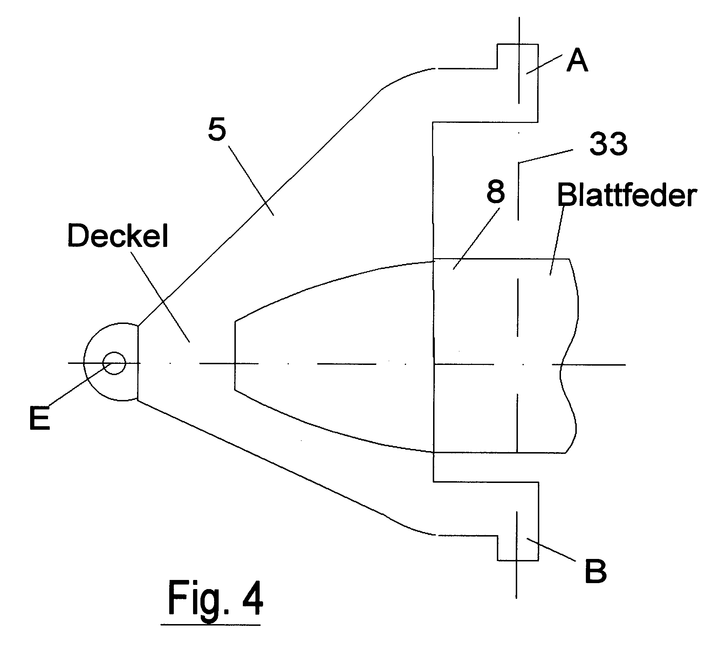

Weiterhin zeigt Figur 4 einen Dreieckslenker 5 in der Aufsicht und ohne übrige daran befestigte Bauteile mit Ausnahme der Querblattfeder 8, die mit ihren freien Ende auf der Oberseite des Dreieckslenkers 5 aufliegt. Da das in Figur 4 nicht dargestellte Rad mittels des nicht dargestellten Achsschenkels 6 am Aufnahmepunkt E des Dreieckslenkers 5 befestigt ist, schwenkt der Dreieckslenker 5 bei Stößen von unten, also von der Fahrbahn aus, um die im wesentlichen waagrecht oder in Längsrichtung 33 verlaufende Verbindungslinie der Aufnahmepunkte a und b, die aus längsgerichteten Lagerbuchsen bestehen, gegen die Kraft der Querblattfeder 8 nach oben.

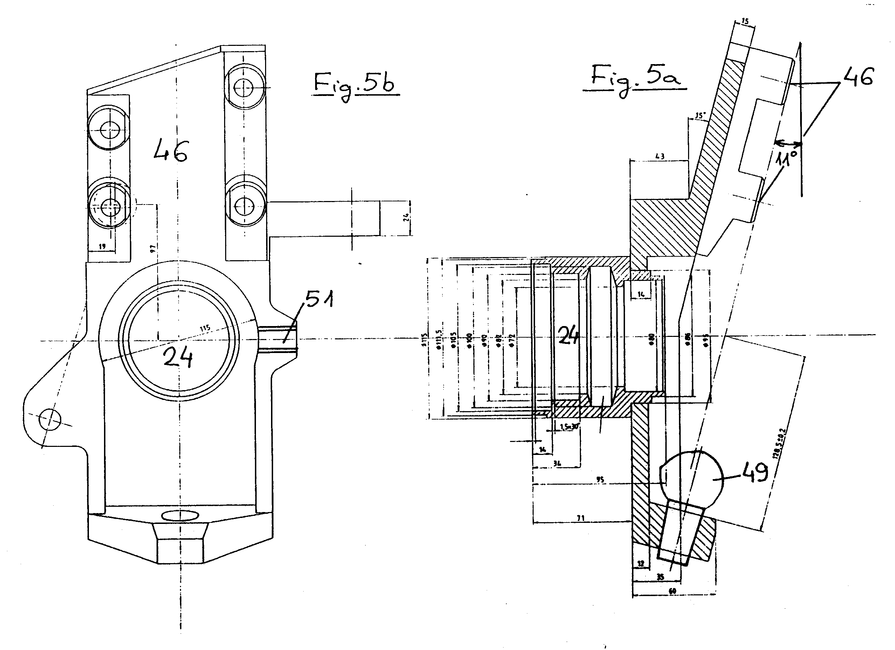

In den Figuren 5a und 5b ist der neue Achsschenkel 6 in einem Vertikalschnitt und in einer Ansicht in Richtung der Achswelle 16 von innen nach außen dargestellt.

Dabei ist zu erkennen, daß die in Figur 5 nicht dargestellte Nabe in der Durchgangsöffnung 24 untergebracht und gelagert ist, und somit die Nabe wegen der Durchgangsöffnung 24 von der Rückseite her direkt und zentrisch mittels der Antriebswelle 16 angetrieben werden kann.

In den beidseitigen Befestigungspositionen 46 für den Dämpfer 7 sind je zwei Gewindebohrungen im Achsschenkel 6 angeordnet, um den Dämpfer 8 fest verschrauben zu können. Die Neigung der Befestigungsposition 46 gegenüber der Senkrechten beträgt nur noch 11 Grad statt ursprünglich 15 Grad. Zusätzlich ist die Befestigungsposition 46 so hochliegend angeordnet, daß der ursprünglich verwendete Dämpfer 7 trotz des vergrößerten Abstandes zwischen Achsträger 4 und der Bodengruppe des Kfz verwendet werden kann.

Weiterhin ist in Figur 5b die Durchgangsbohrung 51 zu erkennen, die quer zur Richtung der Durchgangsöffnung 24 verläuft und eine Verbindung vom Inneren der Durchgangsbohrung 24 nach außen bietet, um hier eine Abtastung des Polrades der Antriebswelle, welche innerhalb der Durchgangsöffnung 24 liegt, für die ABS-Funktion zu ermöglichen.

## Patentansprüche

1. Verfahren zum Umrüsten eines Kfz mit
- einem Motor (1),
- einer angetriebenen Achse (2),
- einer Kardanwelle dazwischen,
- einer nicht angetriebenen Achse (3) mit Einzelradaufhängung mittels
- einem querverlaufenden Achsträger (4),
- je einem Dreieckslenker (5), Achsschenkel (6) und Dämpfer (7) pro Rad und
- wenigstens einer Querblattfeder (8) zum Federn der Dreieckslenker (5) gegenüber dem Achsträger (4), wobei die Enden der Querblattfeder (8) durch nach unten offene U-Profile (10) des Achsträgers (4) diesen verläßt und
- der Achsträger (4) an seinen Enden längsverlaufende Befestigungsbereiche (12) zum Verschrauben unter der Bodengruppe des Kfz aufweist,
von Einachsantrieb auf Mehrachsantrieb,
wobei die Kardanwelle unterbrochen und ein Verteilergetriebe (13) dort eingesetzt wird, welches wenigstens einen zusätzlichen Abtrieb zum Antreiben der Vorderachse aufweist,
**dadurch gekennzeichnet, daß**
- der Abstand des Achsträgers (4) gegenüber der Bodengruppe des Kfz (27) vergrößert wird,
- im Bereich zwischen dem Achsträger (4) und der Bodengruppe ein Zwischengetriebe (14) angeordnet wird,
- die Achsschenkel (6) mit einer Durchgangsöffnung (24) zum Hindurchführen der Antriebswelle (16) ausgestattet werden und die Befestigungsposition für den Dämpfer (7) am Achsschenkel (6) um die für die Abstandsvergrößerung (27) zwischen Achsträger (4) und Bodengruppe des Kfz am Achsschenkel notwendige Distanz höher gesetzt wird,
- oberhalb des U-Profiles (10) zwischen dem ursprünglichen Achsträger (4) und der Bodengruppe ein Durchlaß (28) für die Antriebswelle (16) geschaffen wird und
- das oberhalb der Querblattfeder (8) verlaufende Querprofil (17) des Achsträgers (4) im mittleren Bereich entfernt wird sowie
- zusätzliche querverlaufende Versteifungsprofile (18, 19) zwischen den beidseitigen, längsverlaufenden Befestigungsbereichen (12a, 12b) des Achsträgers (4) angeordnet werden.

2. Verfahren nach Anspruch 1,
**dadurch gekennzeichnet, daß**
die hintere Versteifung (18) als Hutprofil ausgebildet ist und zwischen den hinteren Aufnahmeschalen (B) für den Dreieckslenker (5) am Achsträger (4) eingeschweißt werden.

3. Verfahren nach einem der vorhergehenden Ansprüche,
**dadurch gekennzeichnet, daß**
das vordere Versteifungsprofil (19) zwischen den Befestigungsbereichen (12a, 12b) im Bereich zwischen den Motorauflageflächen (21) und dem U-Profil (10) des Achsträgers (4) eingesetzt wird.

4. Verfahren nach einem der vorhergehenden Ansprüche,
**dadurch gekennzeichnet, daß**
das Verteilergetriebe (13) so nahe wie möglich am Motor-Getriebe-Block (31) angeordnet wird.

5. Verfahren nach einem der vorhergehenden Ansprüche,
**dadurch gekennzeichnet, daß**
die Befestigungsposition (29) für den Dämpfer (7) am Achsschenkel (6) in ihrer Winkellage in Richtung auf eine geringere Spreizung (22) verändert wird und der obere Befestigungspunkt des Dämpfers (8) an der Bodengruppe des Kfz unverändert bleibt.

6. Verfahren nach einem der vorhergehenden Ansprüche,
**dadurch gekennzeichnet, daß**
die hinter dem Achsträger (4) unter der Bodengruppe verschraubte, versteifende durchgängige Getriebequertraverse (23) mit einem eingeschweißten, in Längsrichtung verlaufenden Rohrprofil (30) zum Hindurchführen einer der Kardanwellen ausgestattet wird.

7. Kraftfahrzeug, insbesondere umgerüstet nach dem Verfahren der vorhergehenden Ansprüche, mit
- einem Motor (1),
- wenigstens einer antreibbaren Achse (2),
- einer insbesondere lenkbaren, nicht angetriebenen Achse (3),
wobei die Vorderachse (3) Einzelradaufhängung aufweist mittels
- eines im wesentlichen quer verlaufenden Achsträgers (4), an dem die Vorderräder (40) mittels Dreieckslenkern (5) geführt sind, welche gegenüber dem Achsträger (4) mittels einer Querblattfeder (8) gefedert sind,
**dadurch gekennzeichnet, daß**
die Vorderräder (40) antreibbar sind.

8. Kfz nach Anspruch 7,
**dadurch gekennzeichnet, daß**
der Achsträger (4) in seinen seitlichen, im wesentlichen längsverlaufenden Befestigungsbereichen (12) ein geschlossenes Abstandsprofil (20) auf der Oberseite aufweist, welches eine Durchgangsöffnung (28) für die Antriebswelle (16) aufweist.

9. Kfz nach nach einem der vorhergehenden Vorrichtungsansprüche,
**dadurch gekennzeichnet, daß**
der Achsträger (4) vor und/oder hinter der Querblattfeder (8) in Querrichtung durchgehende Versteifungsprofile (18, 19) aufweist.

10. Kfz nach nach einem der vorhergehenden Vorrichtungsansprüche,
**dadurch gekennzeichnet, daß**
der Achskörper (4) ein hinteres Versteifungsprofil (18) aufweist, das zwischen den hinteren Aufnahmeschalen (B) des Achsträgers (4) für die Dreieckslenker (5) angeordnet ist und das vordere Versteifungsprofil (19) zwischen der Durchgangsöffnung für die Querblattfeder (8) und der vorderen Aufnahmeschale (A) bzw. den Motorauflageflächen (21) des Achsträgers (4) angeordnet ist.

11. Kfz nach nach einem der vorhergehenden Vorrichtungsansprüche,
**dadurch gekennzeichnet, daß**
die Querblattfeder (8) in Längsrichtung (33) betrachtet etwa hutförmig mit nach oben gerichteter Öffnung und seitlich schräg nach unten auslaufenden, sich verjüngenden Enden ausgebildet ist.

12. Kfz nach nach einem der vorhergehenden Vorrichtungsansprüche,
**dadurch gekennzeichnet, daß**
die Querblattfeder (8) bereits außerhalb ihrer hutförmigen Ausbildung mittels einer Klemmplatte (26), die unter den Achsträger (4) geschraubt ist, zwischen dem Achsträger und der Klemmplatte gehalten wird und an ihrem freien Ende mittels eines Lagerdeckels (25) auf der Oberseite des Achsschenkels gehalten wird.

13. Kfz nach nach einem der vorhergehenden Vorrichtungsansprüche,
**dadurch gekennzeichnet, daß**
das Verteilergetriebe (13) ein Zweiwellengetriebe ist, dessen Wellen im wesentlichen übereinander angeordnet sind und wobei der Eingang vom Motor sowie der Ausgang zur Vorderachse im wesentlichen übereinander angeordnet ist.
